# EUROPÄISCHE PATENTSCHRIFT

(11) **EP 3 034 788 B1**
(45) Veröffentlichungstag und Bekanntmachung des Hinweises auf die Patenterteilung: **25.09.2019**
(21) Anmeldenummer: 15198117.2
(22) Anmeldetag: 04.12.2015
(51) Int. Cl.: F01D 5/14, F01D 5/28, F01D 21/04, F02C 7/05, F04D 29/54, F04D 29/38, F04D 29/32, F04D 29/02, F04D 19/00

(54) **KOMPRESSORSCHAUFEL EINER GASTURBINE**
COMPRESSOR BLADE OF A GAS TURBINE
AUBE DE COMPRESSEUR D'UNE TURBINE A GAZ

(30) Priorität: 19.12.2014 DE 102014226700
(43) Veröffentlichungstag der Anmeldung: 22.06.2016
(73) Patentinhaber: Rolls-Royce Deutschland Ltd & Co KG, 15827 Blankenfelde-Mahlow (DE)
(72) Erfinder: SCHREIBER, Karl, 15838 Am Mellensee (DE); HUFENBACH, Prof. Dr. Werner, 01324 Dresden (DE); LANGKAMP, Dr. Albert, 01324 Dresden (DE); WOLLMANN, Tino, 01309 Dresden (DE)
(74) Vertreter: Hoefer & Partner Patentanwälte mbB

(56) Entgegenhaltungen:
- EP-A2- 2 692 988
- FR-A1- 2 988 786
- US-A- 3 628 890
- US-A1- 2014 193 271

## Beschreibung

Die Erfindung bezieht sich auf eine Kompressorschaufel einer Gasturbine gemäß den Merkmalen des Oberbegriffs des Anspruches 1.

Im Einzelnen bezieht sich die Erfindung auf eine Kompressorschaufel mit einem Schaufelblatt und einem Schaufelfuß, wobei der Schaufelfuß und das Schaufelblatt einstückig aus einem Faserverbundwerkstoff gefertigt sind. Weiterhin weist die erfindungsgemäße Kompressorschaufel, welche für einen Hochdruckkompressor oder einen Mitteldruckkompressor einer Gasturbine einsetzbar ist, einen Vorderkantenschutz auf, welcher aus einem metallischen Blechmaterial gefertigt ist. Die erfindungsgemäße Kompressorschaufel kann sowohl als Statorschaufel, als auch als Rotorschaufel ausgebildet sein.

Der Stand der Technik zeigt Kompressorschaufeln, welche aus Metall gefertigt sind. Bei derartigen metallischen Schaufeln ist es nicht erforderlich, die Vorderkante oder Anströmkante zusätzlich zu schützen.

Durch die Verwendung von Faser-Kunststoff-Verbunden zur Herstellung von Kompressorschaufeln und durch die Verwendung von kohlenstofffaserverstärkten Kunststoffen besteht die Notwendigkeit, den Vorderkantenbereich oder Eintrittskantenbereich zusätzlich zu schützen. Im Vergleich zu Fan-Schaufeln ergibt sich bei Kompressorschaufeln, dass größere Partikel, wie Steine oder größere Sandkörner, von den Fan-Schaufeln abgeleitet werden, nachdem sie auf diese aufgetroffen sind. Kleinere, feine Partikel gelangen jedoch durch den Fan in den Kompressor und führen zu Beschädigungen der Kompressorschaufeln durch Erosion. Während aus Faserverbundwerkstoff gefertigte Kompressorschaufeln den mechanischen Anforderungen genügen können und auch in einem höheren Temperaturbereich von bis zu 300°C einsetzbar sind, sind derartige Schaufeln jedoch gegen erosive Belastungen nicht beständig. Vielmehr erfolgt ein erheblicher Verschleiß durch Partikelerosion, der es erforderlich macht, Kompressorschaufeln zu ersetzen. Hierzu ist es erforderlich, die Gasturbine zu demontieren, um Zugang zu dem Kompressor zu ermöglichen.

Aus der US 4,108,572 A ist ein aus einem Composite-Werkstoff gefertigtes Rotorblatt einer Turbomaschine bekannt, bei welchem ein Titanblech fest mit dem Verbundwerkstoff verbunden ist. Dabei trägt das Titanblech zum einen zur Erhöhung der Festigkeit der Schaufel bei, zum anderen verhindert es Fremdkörperbeschädigungen.

Die US 3,628,890 A zeigt eine Kompressorschaufel aus einem Faserverbundwerkstoff, welche mit einem festen Anströmkantenelement, welches einstückig mit einem Schaufelfuß verbunden und aus einem metallischen Werkstoff gefertigt ist, kombiniert ist. Das Anströmkantenelement bildet somit, in Strömungsrichtung gesehen, einen ersten Bereich der Schaufel, welchem sich der restliche Schaufelbereich aus dem Faserverbundwerkstoff anschließt.

Bei beiden oben genannten Konstruktionen ist es erforderlich, erodierte oder beschädigte Kompressorschaufeln durch eine Demontage der Gasturbine auszutauschen.

Der Stand der Technik zeigt weitere Schaufel-Konstruktionen, bei welchen die Vorderkanten der Schaufeln mit einem Vorderkantenschutz aus Metall versehen sind, der jedoch fest mit der Schaufel verbunden ist. Hierzu wird auf die US 7,510,778 B2, die US 8,137,073 B2, die US 5,908,285 A, die CA 2,630,951 A1 und die WO 2013/021141 A1 verwiesen.

Es ergibt sich somit, dass sämtliche der aus dem Stand der Technik bekannten Konstruktionen einen Vorderkantenschutz aufweisen, welcher fest mit der Kompressorschaufel verbunden ist und nicht separat ausgetauscht werden kann. Die Verbindung des Vorderkantenschutzes erfolgt über Klebeverbindungen oder mittels mechanischer Verbindungen, beispielsweise Niete oder Bolzen. Diese Verbindungen weisen jedoch den Nachteil auf, dass sie häufig den Langzeitanforderungen nicht genügen und nur mit hohem Aufwand inspiziert werden können.

Aus der FR 2 988 786 A1 ist ein Vorderkantenschutz einer Schaufel einer Turbomaschine vorbekannt. Die Schaufel weist sowohl an der Saugseite als auch an der Druckseite radial ausgebildete Nuten auf, in welche ein Vorderkantenschutz einrastbar ist.

Ein Vorderkantenschutz gemäß der US 3 628 890 A ist als starres Bauteil einstückig mit einem Schaufelfuß ausgebildet und an seiner der Schaufel zugewandten Seite mit einer Längsnut versehen, in welche ein Schaufelblatt einschiebbar ist.

Die EP 2 692 988 A2 zeigt eine entkoppelte Verdichterschaufel, bei welcher das Schaufelblatt und ein Eintrittskantenelement unabhängig voneinander ausgebildet und mit ihren jeweiligen Fußbereichen an einer Rotorscheibe verankert sind.

Der Erfindung liegt die Aufgabe zugrunde, eine Kompressorschaufel einer Gasturbine der eingangs genannten Art zu schaffen, welche bei einfachem Aufbau und einfacher, kostengünstiger Herstellbarkeit einen wirksamen Vorderkantenschutz aufweist, welcher bei nicht-demontierter Gasturbine austauschbar ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Schaufelblatt mit einer sich im Wesentlichen über die gesamte Länge des Schaufelblatts erstreckenden radialen Nut versehen ist und dass der Vorderkantenschutz lösbar auf das Schaufelblatt aufgeklemmt und mit einer Blechbördelung in der radialen Nut des Schaufelblatts fixiert ist.

Die erfindungsgemäße Lösung sieht somit vor, dass ein aus Blech geformter Vorderkantenschutz elastisch auf die aus einem Faserverbundwerkstoff gefertigte Kompressorschaufel geklemmt und durch die radiale Nut der Kompressorschaufel fixiert wird. Durch das Aufklemmen oder Aufclipsen des Vorderkantenschutzes ist es möglich, diesen ohne Demontage der eigentlichen Kompressorschaufel auszutauschen. Dieser Austausch ist insbesondere im nicht-demontierten Zustand der Gasturbine "on wing" möglich. Hierdurch ist ein kostengünstiger und schneller Austausch von erodierten oder verschlissenen Vorderkantenschutzelementen möglich. Zusätzlich zu der einfachen und leichten Austauschbarkeit des Vorderkantenschutzes ergibt sich als weiterer Vorteil auch die einfache Montierbarkeit, da der Vorderkantenschutz lediglich aufgesteckt und mechanisch verankert wird, nicht jedoch mittels aufwendiger Fügeverfahren an der Kompressorschaufel befestigt werden muss. Es sind somit erfindungsgemäß weder Klebverbindungen, noch Niet-/Bolzenverbindungen erforderlich, um den Vorderkantenschutz zu montieren.

In besonders günstiger Weiterbildung der Erfindung ist vorgesehen, dass die radiale Nut an der Schaufeldruckseite des Schaufelblatts ausgebildet ist. Da die Schaufeldruckseite aerodynamisch weniger sensitiv ist, wird das Strömungsverhalten längs der Kompressorschaufel nicht negativ beeinflusst.

Zum Aufklemmen oder Aufclipsen wird der erfindungsgemäße Vorderkantenschutz lediglich elastisch verformt, so dass mechanische Beschädigungen ausgeschlossen sind.

Um die Strömung entlang der Kompressorschaufel optimal auszugestalten, ist vorgesehen, das ein Vorderkantenbereich der Kompressorschaufel, in welchem der erfindungsgemäße Vorderkantenschutz montiert ist, mit einer sich in Axialrichtung erstreckenden Ausnehmung versehen ist. In diese Ausnehmung wird der Vorderkantenschutz beim Aufklemmen eingefügt, so dass sich eine ungestörte Außenkontur der Kompressorschaufel mit einer glatten Oberfläche ergibt.

Bei Statorschaufeln ist die beschriebene Aufklemmung des Vorderkantenschutzes zu dessen Befestigung ausreichend. Bei Rotorschaufeln ergeben sich jedoch hohe Fliehkräfte von 40.000 bis 50.000 G. Deshalb ist es besonders vorteilhaft, wenn der erfindungsgemäße Vorderkantenschutz zur radialen Sicherung so ausgebildet ist, dass er sich bis in den Schaufelfuß erstreckt. Hierdurch ist es möglich, den Vorderkantenschutz im Bereich des Schaufelfußes an diesem zu verankern. Der Vorderkantenschutz kann den Schaufelfuß umgreifen, es ist jedoch auch möglich, eine oder mehrere Nuten in dem Schaufelfuß vorzusehen, in welche der Vorderkantenschutz eingreift, um auf diese Weise geklemmt und gegen ein radiales Verrutschen gesichert zu werden. Bei dieser Ausgestaltungsform ergibt sich zusätzlich eine Vibrationsdämpfung sowohl des Vorderkantenschutzes als auch der gesamten Kompressorschaufel.

Ein weiterer Vorteil dieser Bauweise besteht in der formschlüssigen Verbindung zwischen Composite Schaufel und Vorderkantenschutz dadurch, dass bei aerodynamischer Schwingungsanregung der Schaufel eine Relativbewegung zwischen Vorderkannte und Composite Schaufel entsteht, die durch die entstehende Reibung zu einer erheblichen Schwingungsdämpfung des Systems führt.

Nachfolgend wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Seitenansicht eines Ausführungsbeispiels mit einer erfindungsgemäßen Kompressorschaufel,
- Fig. 3: eine Schnittansicht entlang der Linie A-A von Fig. 2,
- Fig. 4: eine Detail-Schnittansicht längs der Linie B-B von Fig. 2, und
- Fig. 5: ein weiteres Ausführungsbeispiel, in Schnittansicht, analog Fig. 4.

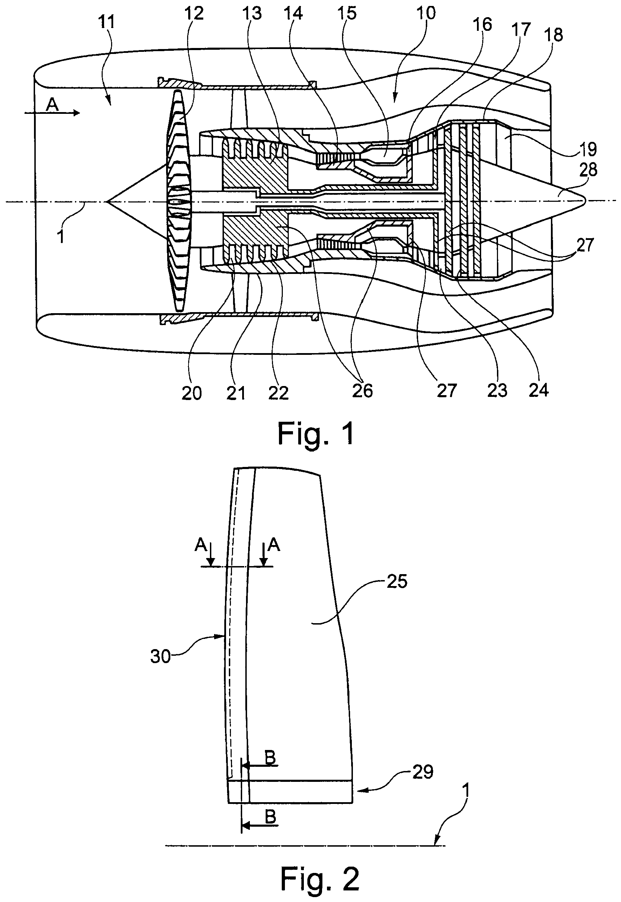

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

Die Fig. 2 zeigt eine vereinfachte Seitenansicht einer erfindungsgemäßen Kompressorschaufel. Diese umfasst ein Schaufelblatt 25 aus einem Faserverbundwerkstoff oder organischem Komposite-Werkstoff. Das Schaufelblatt 25 ist einstückig mit einem Schaufelfuß 29 verbunden, welcher formschlüssig beispielsweise in einer Kompressorscheibe verankert ist, so wie dies aus dem Stand der Technik bekannt ist.

Die Fig. 2 zeigt weiterhin, dass im Anströmbereich des Schaufelblattes 25 ein Vorderkantenschutz 30 angeordnet ist, der das Schaufelblatt 25 gegen Beschädigungen durch feine Partikel oder ähnliches schützt.

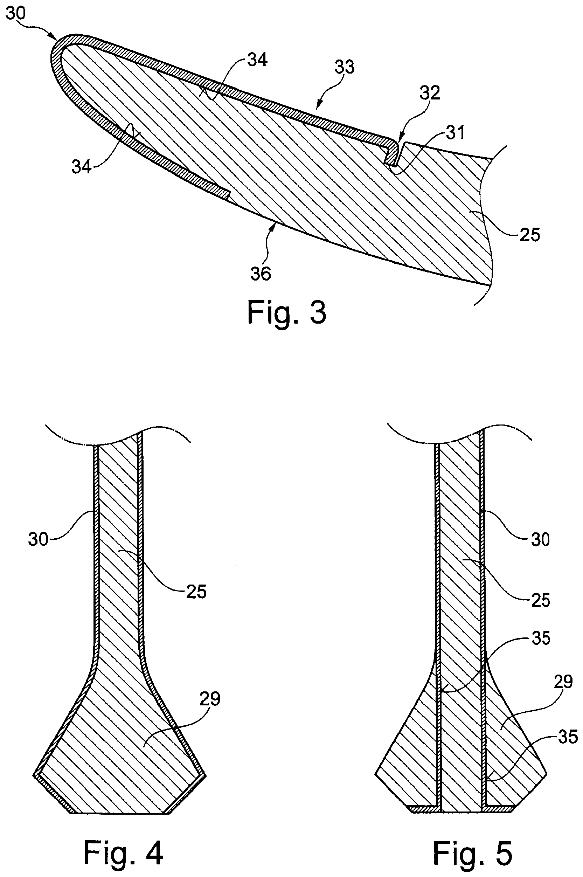

Die Fig. 3 zeigt den aus einem Blechmaterial gefertigten Vorderkantenschutz in einer Schnittansicht. Unter Blechmaterial wird ein Material größerer Dimensionierung bei gleichbleibender Dicke verstanden.

Wie sich aus der Darstellung der Fig. 3 ergibt, weist das Schaufelblatt 25 eine sich über die gesamte Länge des Schaufelblattes 25 erstreckende radiale Nut 31 auf, in welcher eine sich in radialer Richtung erstreckende, an dem Vorderkantenschutz 30 ausgebildete Bördelung des Bleches 32 positioniert ist. Diese formschlüssige Verankerung sichert den aufgeklemmten Vorderkantenschutz 30 und verhindert, dass sich dieser von dem Schaufelblatt 25 löst.

Weiterhin zeigt die Fig. 3, dass das Schaufelblatt 25 im Anströmbereich sowohl an der Schaufeldruckseite 33, als auch an der Schaufelsaugseite 36 mit einer Ausnehmung 34 versehen ist, welche passend zu der Form des Vorderkantenschutzes 30 dimensioniert ist. Somit ergibt sich nach dem Aufklemmen und Einclipsen des Vorderkantenschutzes 30 eine glatte, strömungsoptimierte Oberfläche der Kompressorschaufel.

Die radiale Nut 31 ist an der Schaufeldruckseite 33 vorgesehen, da diese aerodynamisch weniger sensitiv ist und infolgedessen durch die radiale Nut 31 nicht geschwächt oder in ihrem Strömungsverhalten beeinträchtigt wird.

Die Fig. 4 und 5 zeigen jeweils Schnittansichten längs der Linie B-B von Fig. 2. Dabei ist insbesondere ersichtlich, dass der Schaufelfuß 29 verdickt oder verbreitert ausgebildet ist, um mechanisch in einer passend dimensionierten Ausnehmung einer Rotorscheibe oder eines Gehäusebereichs verankert zu werden. Dies führt zu einer radialen Sicherung der gesamten Kompressorschaufel. Um sicherzustellen, dass der Vorderkantenschutz auch bei hohen Drehzahlen eines Kompressorrotors gesichert ist und nicht verrutscht, umgreift bei dem in Fig. 4 gezeigten Ausführungsbeispiel der Vorderkantenschutz 30 den Schaufelfuß 29 und wird dabei der Montage der Kompressorschaufel geklemmt. Dabei erlaubt diese Konstruktion jedoch, den Vorderkantenschutz zu dessen Austausch von der Kompressorschaufel 25 und insbesondere von dem Schaufelfuß 29 abzuziehen, ohne die gesamte Kompressorschaufel demontieren zu müssen.

Bei dem in Fig. 5 gezeigten Ausführungsbeispiel ist der Schaufelfuß 29 über einen Teilbereich seiner axialen Länge mit zwei Nuten 35 versehen, in welche ein Fußbereich des Vorderkantenschutzes 30 einschiebbar ist. Auch hierdurch erfolgt eine radiale Sicherung des Vorderkantenschutzes, während gleichzeitig der Vorderkantenschutz zur Demontage abziehbar ist, ohne die Kompressorschaufel selbst demontieren zu müssen.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Schaufelblatt
- 26: Kompressortrommel oder -scheibe
- 27: Turbinenrotornabe
- 28: Auslasskonus
- 29: Schaufelfuß
- 30: Vorderkantenschutz
- 31: radiale Nut
- 32: Blechbördelung
- 33: Schaufeldruckseite
- 34: Ausnehmung
- 35: Nut
- 36: Schaufelsaugseite

## Patentansprüche

1. Kompressorschaufel einer Gasturbine, mit einem Schaufelblatt (25) und einem Schaufelfuß (29), wobei der Schaufelfuß (29) und das Schaufelblatt (25) einstückig aus einem Faserverbundwerkstoff gefertigt sind, sowie mit einem aus einem metallischen Blechmaterial gefertigten Vorderkantenschutz (30), wobei das Schaufelblatt (25) mit einer sich im Wesentlichen über die gesamte Länge des Schaufelblatts (25) erstreckenden, an der Schaufeldruckseite (33) des Schaufelblatts (25) ausgebildeten radialen Nut (31) versehen ist und dass der Vorderkantenschutz (30) lösbar auf das Schaufelblatt (25) aufgeklemmt und mit einer endseitigen Bördelung (32) in der radialen Nut (31) des Schaufelblatts (25) axial fixiert ist, **dadurch gekennzeichnet, dass** der Vorderkantenschutz (30) sich zur radialen Sicherung bis in den Schaufelfuß (29) erstreckt und an diesem verankert ist.

2. Kompressorschaufel nach Anspruch 1, **dadurch gekennzeichnet, dass** der Vorderkantenschutz (30) zum Aufklemmen elastisch verformbar ist.

3. Kompressorschaufel nach einem der Ansprüche 1 oder 2, **dadurch gekennzeichnet, dass** ein Vorderkantenbereich des Schaufelblatts (25) zur absatzfreien Montage des Vorderkantenschutzes (30) mit einer sich in Radialrichtung erstreckenden Ausnehmung (34) versehen ist.

4. Kompressorschaufel nach einem der Ansprüche 1 bis 3, **dadurch gekennzeichnet, dass** der Vorderkantenschutz den Schaufelfuß (29) umgreift.

5. Kompressorschaufel nach einem der Ansprüche 1 bis 3, **dadurch gekennzeichnet, dass** der Vorderkantenschutz (30) in einer Nut (35) des Schaufelfußes (29) angeordnet ist.

6. Kompressorschaufel nach einem der Ansprüche 1 bis 5, **dadurch gekennzeichnet, dass** diese als Statorschaufel ausgebildet ist.

7. Kompressorschaufel nach einem der Ansprüche 1 bis 5, **dadurch gekennzeichnet, dass** diese als Rotorschaufel ausgebildet ist.

8. Kompressorschaufel nach einem der Ansprüche 1 bis 7, **dadurch gekennzeichnet, dass** diese als Hochdruckkompressorschaufel oder als Mitteldruckkompressor-schaufel ausgebildet ist.

9. Kompressorschaufel nach einem der Ansprüche 1 bis 8, **dadurch gekennzeichnet, dass** das Blech aus einer Titanlegierung gefertigt ist.

10. Kompressorschaufel nach einem der Ansprüche 1 bis 8, **dadurch gekennzeichnet, dass** das Blech aus korrosionsbeständigem Stahl gefertigt ist.

11. Kompressorschaufel nach einem der Ansprüche 1 bis 8, **dadurch gekennzeichnet, dass** das Blech aus einem Nickelbasis-Werkstoff gefertigt ist.

## Claims

1. Compressor blade of a gas turbine, having a blade aerofoil (25) and a blade root (29), wherein the blade root (29) and the blade aerofoil (25) are produced in one piece from a fibre composite material, and having a front edge protector (30), which is produced from a metallic sheet-metal material, wherein the blade aerofoil (25) is provided with a radial groove (31) which extends substantially over the entire length of the blade aerofoil (25) and which is formed on the blade pressure side (33) of the blade aerofoil (25), and wherein the front edge protector (30) is detachably clamped onto the blade aerofoil (25) and is axially fixed with an end-side flanging (32) in the radial groove (31) of the blade aerofoil (25), **characterized in that**, for the purpose of radial securing, the front edge protector (30) extends into the blade root (29) and is anchored thereto.

2. Compressor blade according to Claim 1, **characterized in that**, for the purpose of clamping, the front edge protector (30) is elastically deformable.

3. Compressor blade according to either of Claims 1 and 2, **characterized in that**, for the purpose of shoulder-free fitting of the front edge protector (30), a front edge region of the blade aerofoil (25) is provided with a radially extending recess (34).

4. Compressor blade according to one of Claims 1 to 3, **characterized in that** the front edge protector engages around the blade root (29).

5. Compressor blade according to one of Claims 1 to 3, **characterized in that** the front edge protector (30) is arranged in a groove (35) of the blade root (29).

6. Compressor blade according to one of Claims 1 to 5, **characterized in that** this is in the form of a stator blade.

7. Compressor blade according to one of Claims 1 to 5, **characterized in that** this is in the form of a rotor blade.

8. Compressor blade according to one of Claims 1 to 7, **characterized in that** this is in the form of a high-pressure compressor blade or in the form of a medium-pressure compressor blade.

9. Compressor blade according to one of Claims 1 to 8, **characterized in that** the sheet metal is produced from a titanium alloy.

10. Compressor blade according to one of Claims 1 to 8, **characterized in that** the sheet metal is produced from corrosion-resistant steel.

11. Compressor blade according to one of Claims 1 to 8, **characterized in that** the sheet metal is produced from a nickel-based material.

## Revendications

1. Aube de compresseur d'une turbine à gaz, comprenant une pale d'aube (25) et une emplanture d'aube (29), l'emplanture d'aube (29) et la pale d'aube (25) étant fabriquées d'une seule pièce en un matériau composite renforcé par des fibres, et comprenant une protection de l'arête avant (30) fabriquée en un matériau en tôle métallique, la pale d'aube (25) étant pourvue d'une rainure radiale (31) s'étendant essentiellement sur toute la longueur de la pale d'aube (25), réalisée sur le côté pression de l'aube (33) de la pale d'aube (25) et que la protection de l'arête avant (30) est serrée de manière amovible sur la pale d'aube (25) et est fixée axialement par rabattement du côté de l'extrémité (32) dans la rainure radiale (31) de la pale d'aube (25), **caractérisée en ce que** la protection de l'arête avant (30) s'étend jusque dans l'emplanture d'aube (29) en vue d'une fixation radiale et est ancrée à celle-ci.

2. Aube de compresseur selon la revendication 1, **caractérisée en ce que** la protection de l'arête avant (30) peut être déformée élastiquement en vue du serrage.

3. Aube de compresseur selon l'une quelconque des revendications 1 ou 2, **caractérisée en ce qu'**une région d'arête avant de la pale d'aube (25) est pourvue d'un évidement (34) s'étendant dans la direction radiale en vue du montage sans épaulement de la protection de l'arête avant (30).

4. Aube de compresseur selon l'une quelconque des revendications 1 à 3, **caractérisée en ce que** la protection de l'arête avant vient en prise autour de l'emplanture d'aube (29).

5. Aube de compresseur selon l'une quelconque des revendications 1 à 3, **caractérisée en ce que** la protection de l'arête avant (30) est disposée dans une rainure (35) de l'emplanture d'aube (29).

6. Aube de compresseur selon l'une quelconque des revendications 1 à 5, **caractérisée en ce que** celle-ci est réalisée sous forme d'aube de stator.

7. Aube de compresseur selon l'une quelconque des revendications 1 à 5, **caractérisée en ce que** celle-ci est réalisée sous forme d'aube de rotor.

8. Aube de compresseur selon l'une quelconque des revendications 1 à 7, **caractérisée en ce que** celle-ci est réalisée sous forme d'aube de compresseur haute pression ou sous forme d'aube de compresseur moyenne pression.

9. Aube de compresseur selon l'une quelconque des revendications 1 à 8, **caractérisée en ce que** la tôle est fabriquée à partir d'un alliage de titane.

10. Aube de compresseur selon l'une quelconque des revendications 1 à 8, **caractérisée en ce que** la tôle est fabriquée à partir d'un acier inoxydable.

11. Aube de compresseur selon l'une quelconque des revendications 1 à 8, **caractérisée en ce que** la tôle est fabriquée à partir d'un matériau à base de nickel.
